# EUROPEAN PATENT SPECIFICATION

(11) **EP 2 947 190 B1**
(45) Date of publication and mention of the grant of the patent: **25.04.2018**
(21) Application number: 13892623.3
(22) Date of filing: 29.08.2013
(51) Int. Cl.: D03D 15/04, D03D 11/00

(54) **GAUZE FABRIC**
GAZEGEWEBE
TISSU DE GAZE

(43) Date of publication of application: 25.11.2015
(73) Proprietor: UCHINO CO., LTD., Tokyo 103-0012 (JP)
(72) Inventor: HOZUMI, Shuichi, Tokyo 103-0012 (JP)
(74) Representative: Vossius & Partner Patentanwälte Rechtsanwälte mbB
(86) International application number: PCT/JP2013/073157
(87) International publication number: WO 2015/029184

(56) References cited:
- JP-A- 2003 301 347
- JP-A- 2005 305 276
- JP-A- 2009 247 789
- JP-U- 3 124 623
- JP-U- 3 144 112
- JP-U- 3 154 736

## Description

The present invention relates to a gauze fabric.

Gauze fabrics are a coarse-meshed plain woven fabric. For example, a cotton yarn (a single yarn of a yarn count of 40) is used for weaving the gauze fabrics. Exemplary patterns of the gauze fabrics include a single woven fabric, a double woven fabric, and a triple woven fabric. The single gauze fabric is employed, for example, for medical use and as a dishcloth. The double gauze fabric is employed for clothing, handkerchief, etc. The triple gauze fabric is employed for towels, bed and bedding, etc.

The following Patent Literature 1 to 5 relates to prior art:
JP Hei 11-323693 A,
JP 2004-107823 A,
JP 2004-107824 A,
JP 2007-303008 A, and JP 2009-247789 A, respectively.

A gauze fabric comprising a surface layer, a back layer and a middle layer which are joined is known from JP2009 247789 A.

Gauze is a coarse-meshed fabric, i.e., a loosely woven fabric. In comparison with tightly woven fabrics, gauze has a good touch feeling. Because gauze is a coarse-meshed plain woven fabric, even when the gauze is woven into a multiple woven fabric, the resulting fabric will be still thin. Therefore, gauze is poor in bounce and softness. Because of its coarse-meshed structure, gauze is poor in heat-retaining property. Further, because gauze is a coarse-meshed plain fabric, there is a difficulty in sewing.

The present invention is made to solve the above problem. Namely, a purpose of the present invention is to provide a gauze fabric having a good touch feeling (a soft touch feeling) and breathability, further being excellent in heat-retaining property, and capable of being sewn. This object is achieved with the features of the claims.

According to a first aspect of the present invention, proposed is a gauze fabric including
a surface layer,
a back layer, and
at least one middle layer provided between the surface layer and the back layer,
wherein the surface layer is composed of non-twisted yarns,
wherein the back layer is composed of non-twisted yarns,
wherein the at least one middle layer is composed of twisted yarns, and
wherein the surface layer and the back layer are directly and/or indirectly joined with each other.

According to a second aspect of the present invention, proposed is the gauze fabric, wherein the surface layer and the back layer are joined together via the twisted yarns of the middle layer.

According to a third aspect of the present invention, proposed is the gauze fabric, wherein the twisted yarn is made by twisting two or more yarns.

According to a fourth aspect of the present invention, proposed is the gauze fabric, wherein the twisted yarn is a double yarn.

According to a fifth aspect of the present invention, proposed is the gauze fabric, wherein the non-twisted yarn is selected from yarn count of 30 to yarn count of 80, and yarns composing the twisted yarn are selected from yarn count of 60 to yarn count of 160.

According to a sixth aspect of the present invention, proposed is the gauze fabric, wherein the gauze fabric is an N (N is an integer equal to or greater than 3) woven fabric.

According to a seventh aspect of the present invention, proposed is the gauze fabric, wherein the gauze fabric is a triple woven fabric.

According to an eighth aspect of the present invention, proposed is the gauze fabric, wherein the gauze fabric is a gauze fabric for garment.

According to a ninth aspect of the present invention, proposed is clothes manufactured with the gauze fabric.

According to a tenth aspect of the present invention, proposed is bedding manufactured with the gauze fabric.

The surface layer and the back layer are composed of non-twisted yarns, so that the gauze fabric of the present invention has a soft touch feeling.

A gauze fabric composed of only non-twisted yarns is poor in fabric strength. However, the middle layer is composed of twisted yarns here. Therefore, the resulting gauze fabric is rich in fabric strength. With the rich fabric strength, the gauze fabric can be used as a material to be used in various ways. Because of the rich fabric strength, the gauze fabric of the present invention can be sewn. More specifically, the gauze fabric of the present invention can be used as a material for sewn products.

Further, a shrinkage rate of the surface layer (back layer) differs from a shrinkage rate of the middle layer. As a result, the gauze fabric comes to have rich three-dimensional appearance (bulkiness). Even with the bulkiness, the gauze fabric is still light in weight. Further, such gauze fabric is excellent in heat-retaining property.
The invention is further described with reference to the drawings:

Fig. 1 is a cross-sectional view of a gauze fabric according to an embodiment of the present invention.
Fig. 2 is a cross-sectional view of a gauze fabric according to another embodiment of the present invention.

An embodiment of the present invention will be described below. A first invention is directed to a gauze fabric. The gauze fabric is used in various fields. Specifically, when the gauze fabric is used in a field of garment, the gauze fabric produces a large effect. For example, the gauze fabric is used as a material for clothes (e.g., gown, pajamas, and undershirt). As a matter of course, the use of gauze fabric is not limited to garments. For example, the gauze fabric is employed as a material for the use of various products for infants. For example, the gauze fabric is employed for the use of a material for bedding. The gauze fabric is an N (N is an integer equal to or greater than 3) woven fabric. In the light of weight and cost, N is, preferably, 3, 4, or 5. More preferably, N is 3 (i.e., triple woven fabric). The surface layer of the gauze fabric is composed of non-twisted yarns. The back layer of the gauze fabric is composed of non-twisted yarns. A layer of gauze (at least one layer of gauze) provided between the surface layer and the back layer is composed of twisted yarns. The surface layer and the back layer are directly and/or indirectly joined with each other. For example, the surface layer and the back layer are directly joined together via yarns. Alternatively, the surface layer and the middle layer are directly joined together via yarns (specifically, via twisted yarns composing the middle layer), and the back layer and the middle layer are directly joined together via yarns (specifically, via twisted yarns composing the middle layer). As a result, the surface layer and the back layer are indirectly joined together via the middle layer. The twisted yarn is preferably a yarn which is made by twisting two or more yarns. Most preferable twisted yarn is a double yarn. Preferably, the non-twisted yarn is selected from yarn count of 30 to yarn count of 80 (more preferably, from yarn count of 40 to yarn count of 70). Preferably, a single yarn composing the twisted yarn is selected from yarn count of 60 to yarn count of 160 (more preferably, from yarn count of 80 to yarn count of 140). In a case where the twisted yarn is a double yarn, the twisted yarn is made of a combination of yarns selected from yarn count of 60 to yarn count of 160 (more preferably, from yarn count of 80 to yarn count of 140) and from yarn count of 60 to yarn count of 160 (more preferably, from yarn count of 80 to yarn count of 140).

The gauze fabric of the present embodiment has a soft touch feeling. More specifically, the surface layer and the back layer were composed of non-twisted yarns, and thus the resulting gauze fabric comes to have a soft touch feeling. The gauze fabric composed of only the non-twisted yarns is poor in fabric strength. However, the gauze fabric of the present embodiment includes the middle layer which is composed of twisted yarns and thus is rich in fabric strength. Therefore, the resulting gauze is hardly torn even when a load is applied to the gauze. This enables sewing of the gauze. Further, the surface layer (back layer) was composed of non-twisted yarns, and the middle layer was composed of twisted yarns. Therefore, the resulting gauze is rich in three-dimensional appearance. This is because a shrinkage rate of the surface layer (back layer) differs from a shrinkage rate of the middle layer. Unevenness (three-dimensional appearance) caused by the difference of the shrinkage rate and puffiness of yarns resulting from unravelling of yarns increases a thickness of the material. As a result, the material comes to be soft and excellent in heat-retaining property. Further, the material is light in weight for its thickness.

A second invention is directed to clothes (gown, pajamas, undershirt, etc.) or bedding (sheet, blanket, etc.). These products are manufactured with the above described gauze fabric.

More specific embodiment will be described below. However, the present invention is not limited to only the following embodiment. Various modifications and applications are also encompassed within the scope of the present invention in so far as features of the present invention are not largely deteriorated.

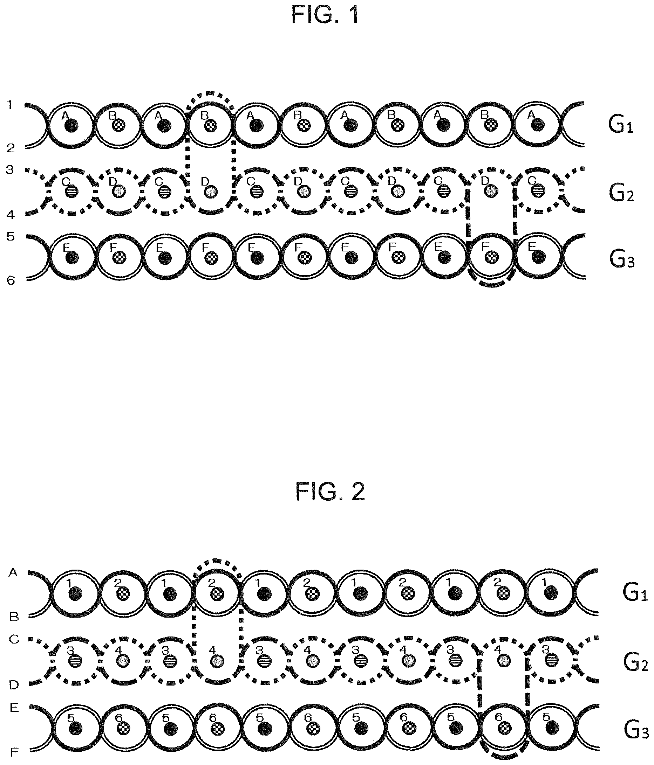

Fig. 1 is a cross sectional view of a gauze fabric (triple gauze fabric) according to a first embodiment of the present invention.

1 and 2 denote warps (warp yarns) composing a layer of gauze G₁ that is a first layer (surface layer/upper layer). A and B denote wefts (woof) composing the layer of gauze G₁ that is the first layer. The warps 1 and 2 and the wefts A and B all are non-twisted yarns (single yarns) of a yarn count of 60.

3 and 4 denote warps composing a layer of gauze G₂ that is a second layer (middle layer). C and D are wefts composing the layer of gauze G₂ that is the second layer. The warps 3 and 4 and the wefts C and D all are double yarns. The double yarn is a twisted yarn (composed of two yarns of a yarn count of 120).

5 and 6 denote warps composing a layer of gauze G₃ that is a third layer (back layer/lower layer). E and F denote wefts composing the layer of gauze G₃ that is the third layer. The warps 5 and 6 and the wefts E and F all are non-twisted yarns (single yarns) of a yarn count of 60.

In a gauze fabric composed of the layers of gauze G₁, G₂, and G₃ which are laminated together, the warp 3 (or the warp 4) is entwined with the weft B (or the weft A) at adequate positions (locations) (see, Fig. 1). In other words, the twisted yarn (warp) 3 of the middle layer G₂ contributes to join the gauze G₂ as the second layer and the gauze G₁ as the first layer together.

In the gauze fabric composed of the layers of gauze G₁, G₂, and G₃ which are laminated together, the warp 4 (or the warp 3) is entwined with a weft F (or a weft E) at adequate positions (locations) (see, Fig. 1). In other words, the twisted yarn (warp) 4 of the middle layer G₂ contributes to join the gauze G₂ as the second layer and the gauze G₃ as the third layer together.

The gauze of the present embodiment includes layers which are joined together via the warps (wefts).

The gauze G₁ as the first layer, the gauze G₂ as the second layer, and the gauze G₃ as the third layer may be manufactured by a type of weave similar to a weave for manufacturing the conventional triple gauze fabric. As a matter of course, the type of weave is not limited thereto.

In the conventional N (N is an integer equal to or greater than 2) gauze fabric, a common type of warp was employed in each layer. To the contrary, in the N (N is an integer equal to or greater than 3) gauze fabric of the present invention, a non-twisted yarn is employed for the first layer (surface layer) and the Nth layer (back layer), and a twisted yarn is employed for at least one middle layer. Therefore, when manufacturing the N (N is an integer equal to or greater than 3) gauze fabric of the present invention, a device capable of supplying at least two different yarns (a non-twisted yarn and a twisted yarn) was used.

A triple gauze fabric composed of the warps 1, 2, 3, 4, 5, and 6 and the wefts A, B, C, D, E, and F, the warps and the wefts being a non-twisted yarn, was manufactured as a comparison example 1.

A triple gauze fabric composed of the warps 1, 2, 3, 4, 5, and 6 and the wefts A, B, C, D, E, and F, the warps and the wefts being a twisted yarn, was manufactured as a comparison example 2.

A triple gauze fabric composed of the warps 1, 2, 5, and 6 and the wefts A, B, E, and F, the warps and the wefts being a twisted yarn, and the warps 3 and 4 and the wefts C and D, the warps and the wefts being a non-twisted yarn, was manufactured as a comparison example 3.

A triple gauze fabric composed of the warps 1, 2, 3, and 4 and the wefts A, B, C, and D, the warps and the wefts being a twisted yarn, and the warps 5 and 6 and the wefts E and F, the warps and the wefts being a non-twisted yarn, was manufactured as a comparison example 4.

A sewing ability was compared between the triple gauze fabric of the present embodiment and each of the triple gauze fabrics of the comparison examples 1, 2, 3, and 4. As a result, sewing condition was not good in the triple gauze fabric of the comparison example 1 that was woven with only non-twisted yarns. Only with a small tensile force being applied, garments (clothes) manufactured with the triple gauze fabric of the comparison example 1 were torn in their sewing areas. To the contrary, sewing condition was good in the triple gauze fabric of the present embodiment. More specifically, garments (clothes) manufactured with the triple gauze fabric of the present embodiment were not torn in their sewing areas. Sewing condition was good in each of the triple gauze fabrics of the comparison examples 2, 3, and 4.

A feel of touch was compared between the triple gauze fabric of the present embodiment and each of the triple gauze fabrics of the comparison examples 1, 2, 3, and 4. As a result, the triple gauze fabric (in which non-twisted yarns were substantially employed for all the warps and wefts of the surface layer and for all the warps and wefts of the back layer) of the present embodiment was excellent in feel of touch. To the contrary, the triple gauze fabrics of the comparison examples 2, 3, and 4 were degraded in feel of touch and softness in comparison with the triple gauze fabric of the present invention. Only little portions of the twisted yarns 3 and 4 are exposed to the surface (see, Fig. 1). A rate of exposure of the twisted yarns 3 and 4, however, is almost 0. Therefore, the feel of touch is not degraded.

Further, in the triple gauze fabric of the present embodiment, the surface layer (back layer) was composed of non-twisted yarns, and the middle layer was composed of twisted yarns. This made the triple gauze fabric of the present embodiment rich in three-dimensional appearance. This rich in three-dimensional appearance brought about excellent heat-retaining property, softness, and light in weight for its thickness.

Hereinabove, a description was made with respect to the triple gauze fabric. The present invention, however, may be an N (N is an integer equal to or greater than 4) gauze fabric. In this case, the surface layer and the back layer are woven with non-twisted yarns, and at least one middle layer is woven with twisted yarns. Alternatively, all the middle layers may be woven with twisted yarns. In a case where the fabric includes two or more middle layers, it is sufficient that at least one middle layer is woven with twisted yarns. However, in a case where the N (N is an integer equal to or greater than 4) gauze fabric including two or more middle layers is compared to the triple gauze fabric, the triple gauze fabric is more excellent in lightness and cost.

Fig. 1 is a cross sectional view of the gauze fabric including layers which are joined together via the warps (warp yarns). Fig. 2 is a cross sectional view of the gauze fabric including layers which are joined together via the wefts (woof). The gauze fabric of Fig. 1 differs from the gauze fabric of Fig. 2 only in whether warps are employed for joining or wefts are employed for joining. Structures of the gauze fabric of Fig. 1 and the gauze fabric of Fig. 2 are identical to each other except for the above described joining structure. Therefore, a detailed description thereof is omitted here. The joining may be performed via both of warps and wefts.

In an example of the gauze fabric of Fig. 1, the gauze G₂ and the gauze Gi are joined with each other, and the gauze G₂ and the gauze G₃ are joined with each other. However, such a structure may be also employed that the surface layer G₁ and the back layer G₃ are directly joined with each other, and thereby the middle layer G₂ between the surface layer G₁ and the back layer G₃ is indirectly joined with them.

In Fig. 1 and Fig. 2, the thickness of warps and the thickness of wefts may look different from each other. However, in the above described embodiment, thicknesses of warps and wefts are substantially the same. As a matter of course, the thicknesses may differ from one another.

### [REFERENCE CHARACTER LIST]

G1 first layer (surface layer)
G2 second layer (middle layer)
G3 third layer (back layer)
1, 2, 5, 6 warp (non-twisted yarn: single yarn)
A, B, E, F weft (non-twisted yarn: single yarn)
3, 4 warp (twisted yarn: double yarn)
C, D weft (twisted yarn: double yarn)

## Claims

1. A gauze fabric comprising:
a surface layer (G1);
a back layer (G3); and
at least one middle layer (G2) provided between the surface layer (G1) and the back layer (G3);
wherein the surface layer (G1) is composed of non-twisted yarns;
wherein the back layer (G3) is composed of non-twisted yarns;
wherein the at least one middle layer (G2) is composed of twisted yarns; and
wherein the surface layer (G1) and the back layer (G3) are directly and/or indirectly joined with each other.

2. The gauze fabric according to claim 1, wherein the surface layer (G1) and the back layer (G3) are joined together via the twisted yarns composing the middle layer (G2).

3. The gauze fabric according to claim 1 or claim 2, wherein the twisted yarn is a yarn made by twisting two or more yarns.

4. The gauze fabric according to any one of claim 1 to claim 3, wherein the twisted yarn is a double yarn.

5. The gauze fabric according to any one of claim 1 to claim 4,
wherein the non-twisted yarn is selected from yarn count of 30 to yarn count of 80; and
wherein yarns composing the twisted yarn are selected from yarn count of 60 to yarn count of 160.

6. The gauze fabric according to any one of claim 1 to claim 5, wherein the gauze fabric is an N (N is an integer equal to or greater than 3) woven fabric.

7. The gauze fabric according to claim 6, wherein the gauze fabric is a triple woven fabric.

8. The gauze fabric according to any one of claim 1 to claim 7, wherein the gauze fabric is a gauze fabric for garment.

9. Clothes manufactured with the gauze fabric according to any one of claim 1 to claim 8.

10. Bedding manufactured with the gauze fabric according to any one of claim 1 to claim 8.

## Patentansprüche

1. Gazegewebe aufweisend:
eine Oberflächenschicht (G1);
eine Rückschicht (G3); und
mindestens eine zwischen der Oberflächenschicht (G1) und der Rückschicht (G3) bereitgestellte Mittelschicht (G2);
wobei die Oberflächenschicht (G1) aus nichtgezwirnten Garnen besteht;
wobei die Rückschicht (G3) aus nichtgezwirnten Garnen besteht;
wobei die mindestens eine Mittelschicht (G2) aus gezwirnten Garnen besteht; und
wobei die Oberflächenschicht (G1) und die Rückschicht (G3) direkt und/oder indirekt miteinander verbunden sind.

2. Gazegewebe nach Anspruch 1, wobei die Oberflächenschicht (G1) und die Rückschicht (G3) über die gezwirnten Garne, die die Mittelschicht (G2) bilden, miteinander verbunden sind.

3. Gazegewebe nach Anspruch 1 oder Anspruch 2, wobei das gezwirnte Garn ein durch Zwirnen von zwei oder mehr Garnen hergestelltes Garn ist.

4. Gazegewebe nach einem der Ansprüche 1 bis 3, wobei das gezwirnte Garn ein doppeltes Garn ist.

5. Gazegewebe nach einem der Ansprüche 1 bis 4,
wobei das nichtgezwirnte Garn aus einer Garnfeinheit von 30 bis einer Garnfeinheit von 80 ausgewählt ist; und
wobei die Garne, die das gezwirnte Garn bilden, aus einer Garnfeinheit von 60 bis einer Garnfeinheit von 160 ausgewählt sind.

6. Gazegewebe nach einem der Ansprüche 1 bis 5, wobei das Gazegewebe ein N-fach gewebtes Gewebe ist, wobei N eine ganze Zahl gleich oder größer als 3 ist.

7. Gazegewebe nach Anspruch 6, wobei das Gazegewebe ein dreifach gewebtes Gewebe ist.

8. Gazegewebe nach einem der Ansprüche 1 bis 7, wobei das Gazegewebe ein Gazegewebe für Bekleidung ist.

9. Kleidung hergestellt mit dem Gazegewebe nach einem der Ansprüche 1 bis 8.

10. Bettzeug hergestellt mit dem Gazegewebe nach einem der Ansprüche 1 bis 8.

## Revendications

1. Tissu de gaze comprenant :
une couche de surface (G1) ;
une couche arrière (G3) ; et
au moins une couche de milieu (G2) fournie entre la couche de surface (G1) et la couche arrière (G3) ;
où la couche de surface (G1) est constituée de fils non torsadés ;
où la couche arrière (G3) est constituée de fils non torsadés ;
où la au moins une couche de milieu (G2) est constituée de fils torsadés ; et
où la couche de surface (G1) et la couche arrière (G3) sont directement et/ou indirectement jointes l'une à l'autre.

2. Tissu de gaze selon la revendication 1, où la couche de surface (G1) et la couche arrière (G3) sont jointes ensemble via les fils torsadés composant la couche de milieu (G2).

3. Tissu de gaze selon la revendication 1 ou la revendication 2, où le fil torsadé est un fil constitué en torsadant deux ou plusieurs fils.

4. Tissu de gaze selon l'une quelconque de la revendication 1 à la revendication 3, où le fil torsadé est un fil double.

5. Tissu de gaze selon l'une quelconque des revendications 1 à 4,
où le fil non torsadé est choisi parmi un nombre de fil de 30 à un nombre de fil de 80 ; et
où les fils constituant le fil torsadé sont choisis parmi un nombre de fil de 60 à un nombre de fil de 160.

6. Tissu de gaz selon l'une quelconque de la revendication 1 à la revendication 5, où le tissu de gaze est un tissu tissé N (N est un nombre entier supérieur ou égal à 3).

7. Tissu de gaze selon la revendication 6, où le tissu de gaze est un tissu tissé triple.

8. Tissu de gaze selon l'une quelconque de la revendication 1 à la revendication 7, où le tissu de gaze est un tissu de gaze pour vêtement.

9. Vêtements fabriqués avec le tissu de gaze selon l'une quelconque de la revendication 1 à la revendication 8.

10. Literie fabriquée avec le tissu de gaze selon l'une quelconque de la revendication 1 à la revendication 8.
